# FASCICULE DE BREVET EUROPEEN

(11) **EP 0 591 513 B1**
(45) Date de publication et mention de la délivrance du brevet: **17.09.1997**
(21) Numéro de dépôt: 93911808.9
(22) Date de dépôt: 21.04.1993
(51) Int. Cl.: C08L 95/00

(54) **COMPOSITION BITUME/POLYMERE VULCANISABLE A DES TEMPERATURES INFERIEURES A 100 C, SA PREPARATION ET SON UTILISATION**
BEI TEMPERATUREN NIEDRIGER ALS 100 C VULKANISIERBARE ZUSAMMENSETZUNG AUS BITUMEN UND POLYMER, IHRE HERSTELLUNG UND VERWENDUNG
BITUMEN/POLYMER COMPOSITION CURABLE AT TEMPERATURES LOWER THAN 100 C, PREPARATION AND UTILISATION THEREOF

(30) Priorité: 23.04.1992 US 872496
(43) Date de publication de la demande: 13.04.1994
(73) Titulaire: ELF ANTAR FRANCE, 92400 Courbevoie (FR)
(72) Inventeur: KRIVOHLAVEK, Dennis, Claremore, OK 74017 (US); KING, Gayle, Terre Haute, IN 47803 (US); PLANCHE, Jean-Pascal, F-69006 Lyon (FR); CHAVEROT, Pierre, F-69600 Oullins (FR)
(74) Mandataire: Boillot, Marc
(86) Numéro de dépôt international: FR9300389
(87) Numéro de publication internationale: WO9322385

(56) Documents cités:
- EP-A- 0 360 656
- EP-A- 0 384 254
- NL-A- 7 807 510

## Description

L'invention a trait à un procédé de préparation d'une composition bitume/polymère fluide et vulcanisable à des températures inférieures à 100° C. Elle se rapporte encore à l'utilisation de la composition obtenue pour des applications de techniques routières, d'étanchéité en génie civil ou en bâtiments ou encore pour des applications industrielles

On sait que l'addition de polymères variés à des bitumes conventionnels permet de modifier favorablement les propriétés mécaniques de ces derniers et de former des compositions bitume/polymère ayant des qualités mécaniques améliorées par rapport à celles de bitumes seuls.

Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylate, polychloroprène, terpolymère éthylène/propylène/diène (EPDM), polynorbornène, ou encore copolymères statistiques ou séquences de styrène et d'un diène conjugué.

Parmi les polymères ajoutés aux bitumes, les copolymères statistiques ou séquencés de styrène et d'un diène conjugué et notamment de styrène et de butadiène ou de styrène et d'isoprène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume/polymère peut être améliorée par couplage du polymère au bitume, cette amélioration permettant en outre d'élargir le domaine d'utilisation des compositions bitume/polymère.

Des compositions bitume/polymère pour lesquelles un copolymère statistique ou séquencé de styrène et d'un diène conjugué tel que butadiène ou isoprène est couplé au bitume peuvent être préparées en faisant appel aux procédés décrits dans les citations US-A-4145 322, US-A-4242246 et US-A-4554313 ainsi que dans la citation EP-A-0 360 656 correspondant à la citation FR-A-2636340. Dans ces procédés, on incorpore ledit copolymère et une source de soufre au bitume, en opérant entre 100° C et 230° C et sous agitation, puis l'on maintient le mélange ainsi formé sous agitation et à une température entre 100° C et 230° C pendant une durée supérieure à 10 minutes et notamment comprise entre 10 et 90 minutes. La source de soufre consiste en soufre chimiquement non lié (US-A-4145322 et US-A-4242246), en un polysulfure organique (US-A-4554313) ou encore en un accélérateur de vulcanisation donneur de soufre utilisé seul ou en association avec du soufre chimiquement non lié, avec un polysulfure ou encore avec un accélérateur de vulcanisation non donneur de soufre EP-A-0360656 et l'incorporation du copolymère et de la source de soufre au bitume est réalisée soit par addition directe desdits ingrédients au bitume (US-A-4145322, US-A-4554413 et EP-A-0360656 ou bien en préparant tout d'abord une solution mère du copolymère et de la source de soufre dans une huile hydrocarbonée, puis en ajoutant ladite solution mère au bitume (US-A-4242246, US-A-4554313 et EP-A-0360656.

Un inconvénient rencontré lors de la modification de bitumes par des polymères est l'augmentation de la viscosité des compositions bitume/polymère obtenues, cette augmentation étant très marquée lorsque la technique de préparation de la composition bitume/polymère conduit à une vulcanisation importante du polymère au sein du bitume, ce qui est le cas, notamment, pour les techniques de préparation décrites dans les citations mentionnées plus haut. Ceci limite fortement le poids moléculaire final du polymère présent dans une composition bitume/polymère de type vulcanisé, si l'on veut que la viscosité d'une telle composition soit compatible avec les techniques conventionnelles de mise en oeuvre de cette composition.

L'objet de l'invention est un procédé de préparation d'une composition bitume/polymère fluide et vulcanisable à des températures inférieures à 100° C et notamment à des températures allant des températures ambiantes des chaussées à 100°C. La composition bitume/polymère obtenue se présente dans un état faiblement vulcanisé. Elle est mise en oeuvre dans cet état faiblement vulcanisé, ce qui facilite ladite mise en oeuvre, et on laisse la vulcanisation se poursuivre après mise en oeuvre de la composition.

La citation NL-A-7807510 concerne un procédé en cinq étapes pour la préparation d'une composition bitumineuse vulcanisable à froid pour la réalisation de revêtements. Dans ce procédé, on produit une émulsion de bitume dans une phase aqueuse renfermant un émulsifiant à base d'argile et des ions métalliques polyvalents, on mélange l'émulsion de bitume obtenue avec un latex d'un caoutchouc, par exemple copolymère styrène/butadiène, renfermant, en poids, 60% de copolymère, 54% d'eau et 6% d'un tensioactif non ionique en opérant à des températures de 15°C à 35°C, le rapport du copolymère au bitume représentant environ 43% en poids, puis on incorpore une composante renfermant du soufre au mélange issu de l'étape précédente pour former une émulsion activée et, enfin, on mélange l'émulsion activée avec des charges, notamment ciment et particules de caoutchouc usagé, et une solution aqueuse d'un accélérateur de vulcanisation pour former la composition bitumineuse finale.

La citation EP-A-0384254 décrit un procédé de préparation de compositions bitume/polymère, dans lequel, à un bitume à l'état fondu ou à l'état dispersé, on incorpore, pour 100 parties en poids de bitume, 1 à 5 parties en poids d'un latex d'un polymère élastomérique, par exemple copolymère styrène/butadiène, une source de soufre, en quantité propre à fournir 1 à 5 parties en poids de soufre, et 0,5 à 5 parties en poids d'un ou plusieurs accélérateurs de vulcanisation, par exemple sels de zinc de mercaptobenzothiazole ou dithiocarbamates de zinc.

Le procédé selon l'invention de préparation d'une composition bitume/polymère fluide et vulcanisable à des températures comprises entre la température ambiante et 100°C, est un procédé dans lequel on met en contact un polymère élastomérique avec un bitume à l'état fondu à des températures comprises entre 100°C et 230°C et sous agitation jusqu'à obtenir un produit homogène, la quantité de polymère élastomérique représentant 0,5% à 20% en poids du bitume, et, audit produit homogène maintenu à l'état fondu et sous agitation, on incorpore un agent de vulcanisation donneur de soufre, en quantité propre à fournir 0,2% à 20% en poids de soufre par rapport au polymère élastomérique, puis au moins un accélérateur de vulcanisation, en proportion comprise entre 0,05% et 15% du poids du polymère élastomèrique pour former un mélange vulcanisable, ledit procédé se caractérisant en ce que l'on utilise un accélérateur de vulcanisation actif à des températures comprises entre la température ambiante et 100°C et en ce que l'on met en contact ledit mélange vulcanisable avec un agent réducteur de viscosité choisi parmi l'eau et les huiles hydrocarbonées présentant un intervalle de distillation à pression atmosphérique, déterminé selon la norme ASTM D 86-87, compris entre 100°C et 500°C, en opérant sous agitation avec une proportion suffisante dudit agent réducteur de viscosité, de manière à former une composition homogène finale qui possède une température comprise entre la température ambiante et 100°C et qui est fluide à ladite température, cette composition fluide constituant ladite composition bitume/polymère.

Le bitume, utilisé pour la préparation de la composition bitume/polymère, est choisi avantageusement parmi les divers bitumes ayant une pénétration, déterminée en 1/10 de mm selon la norme NF T 66004, allant de 10 à 500 et de préférence de 10 à 300. De tels bitumes peuvent être, en particulier, des bitumes de distillation directe ou de distillation sous pression réduite, ou encore des bitumes soufflés ou semi-soufflés ou des mélanges de tels bitumes, lesdits bitumes ou mélanges de bitumes ayant une pénétration située dans les intervalles précités.

Le polymère élastomérique vulcanisable au soufre employé pour la préparation de la composition bitume/polymère peut être tel que polyisoprène, polynorbornène, polybutadiène, caoutchouc butyle, terpolymère éthylène/propylène/diène (EPDM). Avantageusement, ledit polymère élastomérique est choisi parmi les copolymères statistiques ou séquencés de styrène et d'un diène conjugué car ces copolymères se dissolvent très facilement dans les bitumes et confèrent à ces derniers d'excellentes propriétés mécaniques et dynamiques et notamment de très bonnes propriétés de viscoélasticité. En particulier le copolymère de styrène et d'un diène conjugué est choisi parmi les copolymères séquences de styrène et de butadiène, de styrène et d'isoprène, de styrène et de chloroprène, de styrène et de butadiène carboxyle et de styrène et d'isoprène carboxylé. Le copolymère de styrène et de diène conjugué, et en particulier chacun des copolymères précités a avantageusement une teneur pondérale en styrène allant de 2 % à 50 % et de préférence de 5 % à 40 %. La masse moléculaire viscosimétrique moyenne du copolymère de styrène et de diène conjugué, et notamment celle des copolymères mentionnés ci-dessus peut être comprise, par exemple, entre 10 000 et 600 000 et se situe de préférence entre 30 000 et 500 000.

De préférence, le copolymère de styrène et de diène conjugué est choisi parmi les copolymères triséquencés linéaires ou étoilés ou les copolymères diséquencés de styrène et de butadiène, de styrène et d'isoprène, de styrène et de butadiène carboxylé ou encore de styrène et d'isoprène carboxylé, qui ont des teneurs en styrène et des masses moléculaires situées dans les intervalles définis précédemment.

L'agent de vulcanisation donneur de soufre utilisé pour préparer la composition bitume/polymère peut consister en un ou plusieurs produits choisis parmi le soufre élémentaire, les polysulfures et autres molécules donneurs de soufre. Le soufre élémentaire susceptible d'être employé pour constituer, en partie ou en totalité l'agent de vulcanisation donneur de soufre est avantageusement du soufre en fleur et de préférence du soufre cristallisé sous la forme orthorhombique et connu sous le nom de soufre alpha. Parmi les polysulfures conviennent en particulier les polysulfures d'hydrocarbyle, les polysulfures de thiurame, les disulfures d'alcoylphénols et les disulfures tels que disulfure de morpholine et N,N'-disulfure de caprolactame.

Les polysulfures d'hydrocarbyle répondent à la formule générale 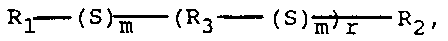 dans laquelle R₁ et R₂ désignent chacun un radical hydrocarboné monovalent, saturé ou insaturé, en C₁ à C₂₀ ou sont reliés entre eux pour constituer un radical hydrocarboné divalent en C₁ à C₂₀, saturé ou insaturé, formant un cycle avec les autres groupements d'atomes associés dans la formule, R₃ est un radical hydrocarboné divalent, saturé ou insaturé, en C₁ à C₂₀, les - (S)ₘ - représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2, et r représente un nombre entier prenant les valeurs de zéro à 10.

Dans la formule précitée, les radicaux hydrocarbonés monovalents R₁ et R₂ en C₁ à C₂₀ ainsi que le radical hydrocarboné divalent R₃ en C₁ à C₂₀ sont choisis notamment parmi les radicaux aliphatiques, alicycliques ou aromatiques. Lorsque les radicaux R₁ et R₂ sont reliés entre eux pour constituer un radical hydrocarboné divalent en C₁ à C₂₀ formant un cycle avec les autres groupements d'atomes associés dans la formule, ledit radical divalent est similaire au radical R₃ et peut être également du type aliphatique, alicyclique, ou aromatique. En particulier les radicaux R₁ et R₂ sont identiques et choisis parmi les radicaux alcoyles en C₁ à C₂₀, par exemple éthyle, propyle, hexyle, octyle, nonyle, décyle, dodécyle linéraire, tertiododécyle, hexadécyle, octadécyle et les radicaux cycloalcoyles et aryles en C₆ à C₂₀, notamment benzyle, phényle, tolyle, cyclohexyle, tandis que le radical R₃ ou le radical divalent formé par la réunion de R₁ et R₂ sont choisis parmi les radicaux alcoylènes en C₁ à C₂₀ ou les radicaux cycloalcoylènes ou arylènes, notamment phénylène, tolylène, cyclohexylène, en C₆ à C₂₀.

Des polysulfures utilisables suivant l'invention sont en particulier ceux définis par la formule
R₁ -(S)ₙ -R₂ dans laquelle R₁ et R₂ désignent chacun un radical hydrocarboné monovalent, saturé ou insaturé, en C₁ à C₂₀ ou sont reliés entre eux pour former un radical divalent R₃ en C₁ à C₂₀, R₁, R₂ et R₃ ayant les significations précédentes, - (S)ₙ - représente un groupement divalent formé par un enchaînement de n atomes de soufre, n étant un nombre entier allant de 2 à 6.

Des polysulfures préférés répondent à la formule générale R₄ - (S)ₚ - R₄, dans laquelle R₄ désigne un radical alcoyle en C₆ à C₁₆, et - (S)ₚ - représente un groupement divalent formé par un enchaînement de p atomes de soufre, p étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécyle, pentasulfure de dihexyle, pentasulfure de dioctyle, pentasulfure de dinonyle, pentasulfure de ditertiododécyle, pentasulfure de dihexadécyle.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Les polysulfures de thiurame répondent en particulier à la formule 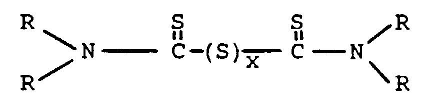 dans laquelle les R, identiques ou différents, représentent chacun un radical hydrocarboné en C₁ à C₁₂ et de préférence C₁ à C₈, notamment un radical alcoyle, cycloalcoyle ou aryle, ou bien deux radicaux R fixés à un n même atome d'azote sont reliés entre eux pour former un radical divalent hydrocarboné en C₂ à C₈ et x est un nombre allant de 2 à 8. Comme exemples de tels polysulfures de thiurame on peut citer notamment les composés disulfure de dipentaméthylène thiurame, tétrasulfure de dipentaméthylène thiurame, hexasulfure de dipentaméthylène thiurame, disulfure de tétrabutylthiurame, disulfure de tétraéthylthiurame et disulfure de tétramethylthiurame.

De préférence, l'agent de vulcanisation est employé en quantité propre à fournir 0,5 à 10 % en poids de soufre par rapport au polymère élastomérique.

Les accélérateurs de vulcanisation actifs aux températures inférieures à 100° C et notamment aux températures comprises entre la température ambiante et 100° C, qui sont utilisés selon l'invention pour former l'accélérateur de vulcanisation, sont notamment des dithiocarbamates tels que le pentaméthylènedithiocarbamate de pipéridinium, le dibutyldithiocarbamate de diméthylcyclohexylammonium et le dithiocarbamate activé commercialisé par la société VANDERBILT sous le nom de BUTYL EIGHT®.

La proportion d'accélérateur de vulcanisation actif aux températures inférieures à 100° C est avantageusement comprise entre 0,05 % et 15 % du poids du polymère élastomérique et représente, plus particulièrement 0,1 % à 10 % de ce poids.

Lors de sa préparation, la composition bitume/polymère peut être encore additionnée d'additifs divers et notamment de composés azotés tels que des amines ou amides jouant le rôle de promoteurs d'adhésion de ladite composition aux surfaces minérales.

Selon une forme de mise en oeuvre du procédé de préparation de la composition bitume/polymère selon l'invention, l'agent réducteur de viscosité est l'eau. La composition bitume/polymère se présente alors sous la forme d'une émulsion aqueuse formée d'une dispersion d'une phase organique consistant en un mélange homogène du bitume, du polymère élastomérique vulcanisable au soufre, de l'agent de vulcanisation donneur de soufre et de l'accélérateur de vulcanisation dans une phase aqueuse renfermant un système émulsifiant et éventuellement un agent régulateur du pH de l'émulsion.

Dans ladite émulsion, la quantité de la phase organique consistant en le mélange homogène précité représente avantageusement 30 à 90 % et de préférence 50 à 85 % du poids de l'émulsion.

Le système émulsifiant présent dans la phase aqueuse de l'émulsion peut être de nature cationique, anionique, non ionique ou même amphotère. Un système émulsifiant de nature cationique, qui donne naissance à une émulsion cationique, comporte un ou plusieurs agents émulsifiants cationiques que l'on peut choisir avantageusement parmi les agents émulsifiants cationiques azotés tels que monoamines grasses, polyamines, amidoamines, amidopolyamines, sels ou oxydes desdites amines et amidoamines, produits de réaction des composés précités avec l'oxyde d'éthylène et/ou l'oxyde de propylène, imidazolines et sels d'ammonium quaternaires. En particulier le système émulsifiant de nature cationique peut être formé par l'association d'un ou plusieurs agents émulsifiants cationiques A choisis parmi les agents émulsifiants azotés cationiques du type des monoamines, des diamines, des amidoamines, des oxydes de telles amines ou amidoamines, des produits de réaction de tels composés avec l'oxyde d'éthylène et/ou l'oxyde de propylène et des sels d'ammonium quaternaires, avec un ou plusieurs agents émulsifiants B choisis parmi les agents émulsifiants azotés cationiques possédant dans leur molécule au moins trois groupements fonctionnels choisis parmi les groupements amines et amides de telle sorte que l'un au moins desdits groupements fonctionnels soit un groupement amine, le rapport de la quantité pondérale du ou des composés A à la quantité pondérale totale des composés A et B allant en particulier de 5 % à 95 %. Un système émulsifiant de nature anionique, qui donne naissance à une émulsion anionique, comporte un ou plusieurs agents émulsifiants anioniques que l'on peut choisir notamment parmi les sels de métal alcalin ou d'ammonium d'acides gras, les polyalcoxycarboxylates de métal alcalin, les N-acylsarcosinates de métal alcalin, les hydrocarbylsulfonates de métal alcalin et notamment les alcoylsulfonates de sodium, les arylsulfonates de sodium et les alcoylarylsulfonates de sodium, les alcoylarènesulfonates de sodium, les lignosulfonates de sodium, les dialcoylsulfosuccinates de sodium et les alcoylsulfates de sodium. on peut également utiliser un système émulsifiant de nature non ionique formé d'un ou plusieurs agents émulsifiants non ioniques que l'on peut notamment choisir parmi les alcools gras éthoxylés, les acides gras éthoxylés, les esters de sorbitan, les esters de sorbitan éthoxylés, les alcoylphénols éthoxylés, les amides gras éthoxylés et les esters d'acides gras de la glycérine. on peut encore utiliser un système émulsifiant de nature amphotère formé d'un ou plusieurs agents émulsifiants amphotères que l'on peut choisir, par exemple, parmi les bétaines et les dérivés imidazolinium amphotères. Il est également possible d'utiliser un système émulsifiant consistant en un mélange d'agents émulsifiants de natures différentes, par exemple un mélange d'un ou plusieurs agents émulsifiants anioniques ou cationiques avec un ou plusieurs agents émulsifiants non ioniques ou/et amphotères. Pour plus de détails sur les agents émulsifiants susceptibles de constituer des systèmes émulsifiants utilisables selon l'invention, on peut se référer au manuel de KIRK-OTHMER intitulé ENCYCLOPEDIA OF CHEMICAL TECHNOLOGY, Third Edition, Volume 22, pages 347 à 360 (émulsifiants anioniques), pages 360 à 377 (émulsifiants non ioniques), pages 377 à 384 (émulsifiants cationiques) et pages 384 à 387 (émulsifiants amphotères).

La quantité de système émulsifiant présente dans l'émulsion peut varier assez largement. Cette quantité peut représenter avantageusement de 0,03 % à 3 % et de préférence de 0,06 % à 2 % du poids total de l'émulsion.

L'agent que l'on utilise éventuellement pour ajuster le pH de l'émulsion à la valeur désirée peut être un acide, par exemple un acide minéral tel que HCl, HNO₃, H₃PO₄ ou un acide mono- ou polycarboxylique saturé ou insaturé tel que l'acide acétique, l'acide formique, l'acide oxalique ou l'acide citrique, lorsque la valeur du pH de l'émulsion doit être abaissée, ou bien une base ou un sel basique, notamment une base minérale consistant en un hydroxyde de métal alcalin comme la soude ou en un oxyde ou hydroxyde alcalinoterreux, lorsque la valeur du pH de l'émulsion doit être augmentée.

La composition bitume/polymère en forme d'émulsion aqueuse est obtenue en réalisant tout d'abord un mélange homogène renfermant le bitume, le polymère élastomérique vulcanisable au soufre, l'agent de vulcanisation et l'accélérateur de vulcanisation, puis en mettant ledit mélange en émulsion aqueuse, l'émulsion aqueuse produite étant à des températures inférieures à 100° C et notamment à des températures comprises entre la température ambiante et 100° C et étant maintenue subséquemment à de telles températures notamment au cours de son stockage et de son utilisation.

Pour produire ledit mélange homogène, destiné à être mis ensuite en émulsion aqueuse, on opère, de préférence, en mettant tout d'abord en contact le polymère élastomérique avec le bitume à l'état fondu, c'est-à-dire maintenu à des températures comprises entre 100° C et 230° C et de préférence entre 120° C et 180° C, en opérant sous agitation pendant une durée suffisante, généralement de l'ordre de quelques dizaines de minutes à quelques heures et, par exemple, de 20 minutes à 5 heures, pour former un produit homogène, puis en incorporant l'agent de vulcanisation et ensuite l'accélérateur de vulcanisation audit produit homogène en opérant toujours sous agitation et à l'état fondu.

Les quantités de polymère élastomérique, d'agent de vulcanisation et d'accélérateur de vulcanisation incorporées successivement au bitume, pour la réalisation du mélange homogène, sont choisies pour être comprises dans les intervalles définis précédemment pour ces quantités.

Avant d'incorporer l'agent de vulcanisation et l'accélérateur de vulcanisation au produit homogène résultant de l'incorporation du polymère élastomérique au bitume, on peut encore soumettre ledit produit homogène à une prévulcanisation à l'aide d'un système de vulcanisation donneur de soufre, qui peut consister en soufre chimiquement non lié, en un polysulfure organique ou encore en un accélérateur de vulcanisation donneur de soufre utilisé seul ou en association avec un ou plusieurs membres du groupe formé par le soufre chimiquement non lié, les polysulfures organiques et les accélérateurs de vulcanisation non donneurs de soufre, ladite prévulcanisation étant conduite de manière à obtenir un produit homogène prévulcanisé ayant une viscosité d'au plus 2 Pa.s à l'état fondu. Pour réaliser cette prévulcanisation, on peut opérer en incorporant au produit homogène à l'état fondu le système de vulcanisation donneur de soufre en quantité propre à fournir une quantité de soufre élémentaire ou radicalaire représentant 0,5 % à 10 % et plus particulièrement 1 % à 8 % du poids du polymère élastomérique utilisé pour produire le produit homogène bitume/polymère précité et en maintenant le tout sous agitation à une température comprise entre 100° C et 230° C et de préférence entre 120° C et 180° C pendant une durée suffisante pour former un produit homogène prévulcanisé ayant la viscosité désirée à l'état fondu. n peut encore préparer le produit homogène prévulcanisé en incorporant le polymère élastomérique et le système de vulcanisation donneur de soufre au bitume sous la forme d'une solution mère de ces produits dans une huile hydrocarbonée, qui peut être choisie, notamment, parmi celles définies précédemment comme susceptibles de constituer l'agent réducteur de viscosité.

Dès son obtention, le mélange homogène précité renfermant le produit homogène non prévulcanisé ou prévulcanisé est mis en émulsion aqueuse. Pour ce faire, on réalise, dans une zone de formation d'émulsion et notamment dans un appareil du type moulin à colloides, une dispersion intime dudit mélange homogène dans une phase aqueuse renfermant le système émulsifiant, en quantité appropriée pour obtenir la concentration définie plus haut, et éventuellement l'agent régulateur du pH. On opère en amenant simultanément et séparément à la zone de formation de l'émulsion, d'une part, le mélange homogène, sous la forme d'une masse fondue, dont la température est comprise entre 100° C et 180° C et de préférence entre 120° C et 160° C, et, d'autre part, la phase aqueuse renfermant les ingrédients précités et possédant une température comprise entre 15° C et 80° C et de préférence entre 20° C et 60° C et en maintenant l'ensemble dans ladite zone pendant un temps suffisant pour former l'émulsion. On peut encore prémélanger ledit mélange homogène et ladite phase aqueuse avant leur introduction dans la zone de formation de l'émulsion.

Si besoin est, un additif régulateur de viscosité consistant par exemple en un polyuréthanne hydrosoluble ou en une gomme telle que xanthane ou scléroglucane peut être présent dans la phase aqueuse utilisée dans la préparation de l'émulsion aqueuse.

Lors de la préparation de l'émulsion, la phase aqueuse renfermant le système émulsifiant et les ingrédients éventuels tels que régulateur de pH et additif régulateur de viscosité, d'une part, et le mélange homogène, d'autre part, sont amenés à la zone de formation d'émulsion en proportions telles que l'émulsion résultante renferme avantageusement en poids, comme indiqué précédemment, 30 à 90 % et de préférence 50 à 85 % de phase organique constituée du mélange homogène renfermant le bitume, le polymère élastomérique vulcanisable au soufre, l'agent de vulcanisation donneur de soufre et l'accélérateur de vulcanisation.

Comme indiqué plus haut, l'émulsion aqueuse, une fois obtenue, est directement utilisée ou bien est stockée en vue d'une utilisation ultérieure en étant maintenue dans l'un ou l'autre cas à des températures inférieures à 100° C et notamment comprises entre la température ambiante et 100° C.

Selon une autre forme de mise en oeuvre du procédé de préparation de la composition bitume/polymère selon l'invention, l'agent réducteur de viscosité est une huile hydrocarbonée présentant un intervalle de distillation à pression atmosphérique, déterminé selon la norme ASTM D 86-87 compris entre 100° C et 500° C et situé plus spécialement entre 150° C et 400° C. La composition bitume/polymère se présente alors sous la forme d'une masse hydrocarbonée homogène, qui renferme le bitume, le polymère élastomérique vulcanisable au soufre, l'agent de vulcanisation, l'accélérateur de vulcanisation et l'huile hydrocarbonée et pour laquelle la proportion d'huile hydrocarbonée est telle que ladite masse soit fluide aux températures inférieures à 100° C et notamment comprises entre la température ambiante et 100° C. Ladite proportion d'huile hydrocarbonée représente avantageusement 2 % à 70 % et de préférence 3 % à 40 % du poids du bitume.

L'huile hydrocarbonée utilisable selon l'invention peut être, par exemple, un distillat pétrolier tel qu'une coupe pétrolière de caractère aromatique, une coupe pétrolière de caractère naphténo-aromatique, une coupe pétrolière de caractère naphténo-paraffinique ou une coupe pétrolière de caractère paraffinique, ou bien encore une huile de houille ou une huile d'origine végétale.

Pour produire la masse hydrocarbonée homogène définie ci-dessus, on opère, de préférence, en mettant tout d'abord en contact le polymère élastomérique avec le bitume à l'état fondu, c'est-à-dire maintenu à des températures comprises entre 100° C et 230° C et de préférente entre 120° C et 180° C, en opérant sous agitation pendant une durée suffisante, généralement de l'ordre de quelques dizaines de minutes à quelques heures et, par exemple de 20 minutes à 5 heures, pour former un produit homogène, puis en incorporant l'agent de vulcanisation et ensuite l'accélérateur de vulcanisation et également l'huile hydrocarbonée audit produit homogène en opérant toujours sous agitation et à l'état fondu, l'incorporation de l'huile hydrocarbonée étant réalisée avant l'incorporation de l'agent de vulcanisation ou après l'incorporation de l'accélérateur de vulcanisation, la masse hydrocarbonée homogène produite étant à des températures inférieures à 100° C et notamment à des températures comprises entre la température ambiante et 100° C et étant maintenue subséquemment à de telles températures notamment au cours de son stockage et de son utilisation.

Les quantités de polymère élastomérique, d'agent de vulcanisation, d'accélérateur de vulcanisation et d'huile hydrocarbonée incorporées au bitume, pour produire la masse hydrocarbonée homogène, sont choisies pour être comprises dans les intervalles définis précédemment pour ces quantités.

La masse hydrocarbonée homogène, une fois obtenue, peut être utilisée directement ou bien peut être stockée en vue d'une utilisation ultérieure et dans l'un ou l'autre cas elle est maintenue à des températures inférieures à 100° C et notamment comprise entre la température ambiante et 100° C.

Lorsque l'on prépare le mélange homogène, que l'on met ensuite en émulsion aqueuse, ou bien la masse hydrocarbonée homogène, le produit homogène résultant de l'incorporation du polymère élastomérique au bitume peut être obtenu en réalisant tout d'abord l'incorporation du polymère élastomérique à une partie seulement du bitume, puis en mélangeant le produit obtenu au bitume restant.

La composition bitume/polymère obtenue par le procédé selon l'invention, que l'on stocke et utilise à des températures inférieures à 100° C et notamment comprises entre la température ambiante et 100° C, convient pour des applications de techniques routières, d'étanchéité en génie civil ou en bâtiment ou encore pour des utilisations industrielles.

L'invention est illustrée par les exemples suivants donnés à titre non limitatif.

Dans ces exemples, les quantités et pourcentages sont donnés en poids sauf indication contraire.

### EXEMPLE 1 :

On préparait trois compositions bitume/polymère en émulsion aqueuse, les deux premières (essai 1.a et essai 1.b) étant des compositions témoins et la troisième (essai 1.c) étant une composition selon l'invention.

### Essai 1.a :

En opérant entre 160° C et 170° C et sous agitation, on mélangeait 94 parties d'un bitume de pénétration 120-150 avec 6 parties d'un copolymère diséquencé de styrène et de butadiène présentant une masse moléculaire viscosimétrique moyenne d'environ 75 000 et renfermant 25 % de styrène jusqu'à obtenir un produit homogène. Ce produit était alors dilué par addition d'une quantité suffisante du bitume précité possédant une température entre 135 ° C et 150° C pour obtenir un mélange homogène renfermant 3 % de copolymère.

Ledit mélange homogène de bitume et de polymère était alors mis en émulsion en opérant comme suit.

Dans 80 parties d'eau maintenue à 50° C on introduisait, sous agitation, 0,8 partie d'un système émulsifiant consistant en une polyamine grasse de type polypropylènediamine jusqu'à dispersion complète dudit émulsifiant. La suspension ainsi obtenue était neutralisée par 0,5 partie d'acide chlorhydrique concentré en maintenant le tout sous forte agitation à la température de 50° C. La préparation résultante constituait la phase aqueuse utilisée pour produire l'émulsion.

On formait l'émulsion dans un émulseur du type moulin à colloides, dans lequel on introduisait, simultanément et séparément, 80 parties de la phase aqueuse précitée à 50° C et 200 parties du mélange homogène de bitume et de polymère à environ 140° C. On obtenait 280 parties de composition bitume/polymère en émulsion aqueuse que l'on amenait et maintenait à une température de 55° C.

### Essai 1.b

On préparait tout d'abord un mélange homogène de bitume et de polymère comme décrit dans l'essai 1.a, puis au mélange obtenu on incorporait 0,2 partie de soufre en opérant sous agitation à une température d'environ 140° C. Un fois l'incorporation du soufre terminée, le produit résultant était mis en émulsion aqueuse comme indiqué dans l 'essai 1.a.

L'émulsion aqueuse obtenue était amenée et maintenue à 55° C.

### Essai 1.c

On préparait tout d'abord un mélange homogène de bitume et de polymère comme décrit dans l'essai 1.a, puis au mélange obtenu on incorporait 0,2 partie de soufre, à titre d'agent de vulcanisation, puis 0,2 partie de BUTYL EIGHT ^{R}, à titre d'accélérateur de vulcanisation actif aux températures inférieures à 100° C, en opérant sous agitation à une température d'environ 140 ° C. Une fois l'incorporation du soufre et de l'accélérateur de vulcanisation terminée, le produit résultant était mis immédiatement en émulsion aqueuse comme indiqué dans l'essai 1.a. L'émulsion aqueuse obtenue était amenée à 55° C et maintenue à cette température.

Chacune des émulsions produites dans les essais 1.a à 1.c était répandue dans des moules en acier inoxydable à raison de 1,8 litre/m² et le contenu des moules était exposé pendant une durée déterminée à une température de 60° C (exemple de température ambiante de la surface d'une chaussée) dans un four à convection. Après la durée d'exposition désirée à la température de 60° C, le contenu des moules était ensuite recueilli en plaçant ces moules sur une plaque chauffée, dont la température, contrôlée par un thermomètre de surface, était maintenue dans l'intervalle 50° C-55° C et en râclant le contenu des moules dans une boîte métallique thermostatée maintenue à une température n'excédant pas 57 ° C.

On soumettait des échantillons du liant bitumineux recueilli dans la boîte thermostatée, à l'essai "force/ductilité" tel que défini dans la proposition de norme ASTM P 226.

Dans cet essai, on étire à une vitesse et à une température normalisées une éprouvette de forme déterminée obtenue à partir du liant bitumineux et on enregistre la force de résistance à l'étirage en fonction de l'élongation de l'éprouvette.

Dans le cas présent, l'essai "force/ductilité" était mis en oeuvre à 4° C avec une vitesse d'étirage de 5 cm/minute et l'on enregistrait la force développée pour l'étirage de l'éprouvette, cette dernière présentant une section efficace initiale de 1 cm², en fonction de l'élongation.

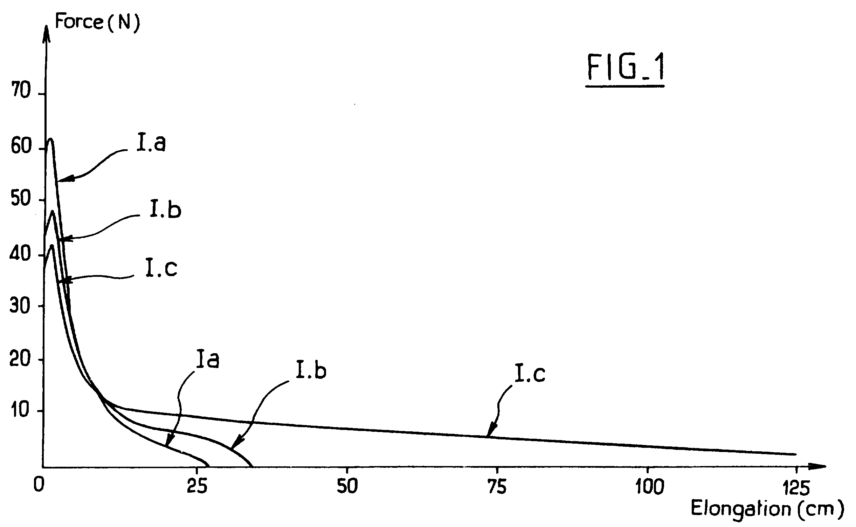

Les caractéristiques des liants bitumineux dérivant de chacune des émulsions 1.a, 1.b et 1.c après exposition pendant trois jours à 60° C dans le four à convection, sont illustrées par leurs courbes force/élongation obtenues lors de l'essai "force/ductilité" et représentées sur la figure 1 du dessin annexé, à savoir courbe I.a (émulsion de l'essai 1.a), courbe I.b (émulsion de l'essai 1.b) et courbe I.c (émulsion de l'essai 1.c).

### EXEMPLE 2 :

On préparait une composition bitume/polymère en émulsion aqueuse selon l'invention en opérant comme décrit dans l'essai 1.c de l'exemple 1 avec toutefois remplacement du copolymère diséquencé de styrène et de butadiène par la même quantité d'un copolymère radial (étoilé) de styrène et de butadiène ayant une masse moléculaire viscosimétrique moyenne d'environ 300 000 et une teneur en styrène égale à 30 %.

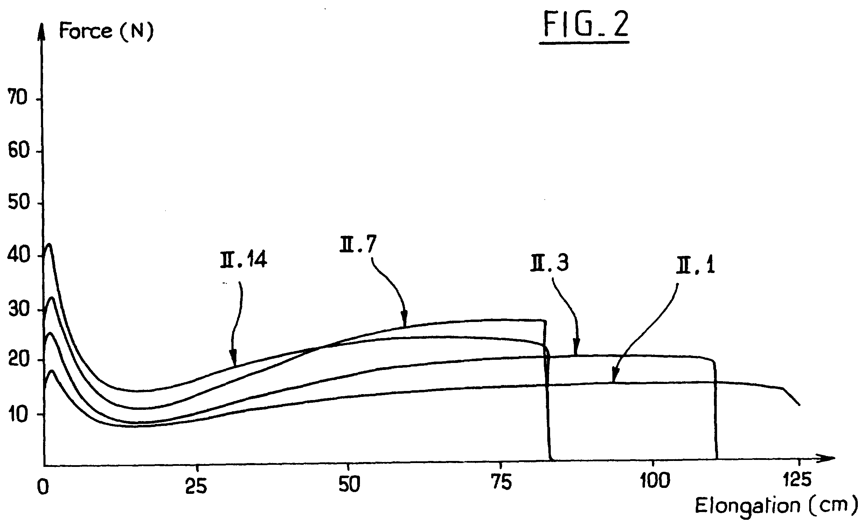

Les caractéristiques du liant bitumineux dérivant de l'émulsion obtenue, après exposition à 60° C dans le four à convection pendant quatre durées différentes, à savoir 1, 3, 7 et 14 jours et récupération du contenu des moules comme indiqué dans l'exemple 1, sont illustrées par les courbes force/élongation obtenues lors de l'essai "force/ductilité" et représentées sur la figure 2 du dessin annexé, à savoir courbes II.1, II.3, II.7 et II.14 correspondant à des durées d'exposition dans le four à convection égales respectivement à 1, 3, 7 et 14 jours.

### EXEMPLE 3 :

On préparait une composition bitume/polymère selon l'invention du type masse hydrocarbonée homogène, c'est-à-dire fluidifiée par une huile hydrocarbonée.

En opérant entre 160° C et 170° C et sous agitation, on mélangeait 94 parties d'un bitume de pénétration 120-150 avec 6 parties d'un copolymère diséquencé de styrène et de butadiène présentant une masse moléculaire viscosimétrique moyenne d'environ 75 000 et renfermant 25 % de styrène, jusqu'à obtenir un produit homogène. Ce produit était alors dilué par addition de 100 parties du bitume précité amené à une température entre 135° C et 150° C pour obtenir un mélange homogène renfermant 3 % de copolymère. Ledit mélange était ensuite fluidifié et refroidi à 80° C - 90°C par addition d'un distillat pétrolier, à savoir 13 parties d'une coupe pétrolière ayant un intervalle de distillation de l'ordre de 180° C à 360° C, ladite coupe étant amenée à température ambiante.

Au mélange fluidifié on incorporait alors 0,2 partie de soufre, à titre d'agent de vulcanisation, puis 0,2 partie de BUTYL EIGHT ^{R}, à titre d'accélérateur de vulcanisation, en opérant à 80°C - 90°C sous agitation. Une fois terminée l'incorporation du soufre et de l'accélérateur de vulcanisation, la masse hydrocarbonée homogène obtenue était coulée dans des récipients clos et lesdits récipients étaient ensuite placés dans un four à convection, dans lequel ils étaient soumis à des températures de 80° C-90° C pendant quatre durées différentes, à savoir 1, 3, 7 et 14 jours.

A l'issue de leur résidence dans le four à convection, les liants bitumineux contenus dans les récipients étaient soumis à l'essai de vieillissement dit "Tilt Rolling Thin Film Oven Test" défini dans la norme ASTM D 2872 pour déterminer leur état de vulcanisation.

L'essai de vieillissement était conduit avec les adaptations suivantes :
. la température dans le four de l'essai était ajustée à 88° C-93° C, et
. l'échantillon était soumis aux conditions de l'essai pendant 1 heure.

Cette procédure adaptée s'est révélée suffisante pour éliminer l'agent de fluidification (coupe pétrolière) et fournir un échantillon résiduel pour le développement de la vulcanisation.

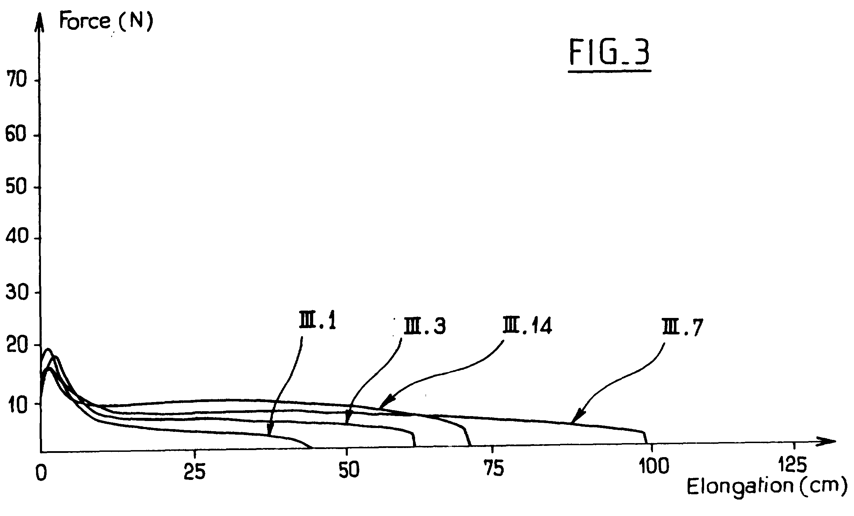

Les caractéristiques du liant bitumineux dérivant de la composition bitume/polymère fluidifiée, après stockage à 80° C-90° C pendant les quatre durées précitées et soumis à l'essai de vieillissement, sont illustrées par les courbes force/élongation obtenues lors de l'essai "force/ductilité" et représentées sur la figure 3 du dessin annexé, à savoir courbe III.1, III.3, III.7 et III.14 correspondant à des durées de stockage dans le four à convection égales respectivement à 1, 3, 7 et 14 jours.

## Revendications

1. Procédé de préparation d'une composition bitume/polymère fluide et vulcanisable à des températures comprises entre la température ambiante et 100° C, dans lequel on met en contact un polymère élastomérique avec un bitume à l'état fondu à des températures comprises entre 100° C et 230° C et sous agitation jusqu'à obtenir un produit homogène, la quantité de polymère élastomérique représentant 0,5 % à 20 % en poids du bitume, et, audit produit homogène maintenu à l'état fondu et sous agitation, on incorpore un agent de vulcanisation donneur de soufre, en quantité propre à fournir 0,2 % à 20 % en poids de soufre par rapport au polymère élastomérique, puis au moins un accélérateur de vulcanisation, en proportion comprise entre 0,05 % et 15 % du poids du polymère élastomérique pour former un mélange vulcanisable, ledit procédé se caractérisant en ce que l'on utilise un accélérateur de vulcanisation actif à des températures comprises entre la température ambiante et 100 ° C et en ce que l'on met en contact ledit mélange vulcanisable avec un agent réducteur de viscosité choisi parmi l'eau et les huiles hydrocarbonées présentant un intervalle de distillation à pression atmosphérique, déterminé selon la norme ASTM D 86-87, compris entre 100° C et 500° C, en opérant sous agitation avec une proportion suffisante dudit agent réducteur de viscosité, de manière à former une composition homogène finale qui possède une température comprise entre la température ambiante et 100° C et qui est fluide à ladite température, cette composition fluide constituant ladite composition bitume/polymère.

2. Procédé selon la revendication 1, caractérisé en ce que le bitume a une pénétration, déterminée en 1/10 de mm selon la norme NF T 66 004, allant de 10 à 500.

3. Procédé selon la revendication 2, caractérisé en ce que ladite pénétration va de 10 à 300.

4. Procédé selon l'une des revendications 1 à 3, caractérisé en ce que le polymère élastomérique vulcanisable au soufre est un copolymère de styrène et d'un diène conjugué.

5. Procédé selon la revendication 4, caractérisé en ce que ledit copolymère est un copolymère de styrène et d'un diène conjugué choisi parmi butadiène, isoprène, chloroprène, butadiène carboxyle et isoprène carboxylé.

6. Procédé selon la revendication 4 ou 5, caractérisé en ce que le copolymère de styrène et d'un diène conjugué renferme 2 % à 50 % en poids de styrène.

7. Procédé selon l'une des revendications 4 à 6, caractérisé en ce que le copolymère de styrène et d'un diène conjugué possède une masse moléculaire viscosimétrique moyenne comprise entre 10 000 et 600 000.

8. Procédé selon la revendication 7, caractérisé en ce que ladite masse moléculaire viscosimétrique est comprise entre 30 000 et 500 000.

9. Procédé selon l'une des revendications 1 à 8, caractérisé en ce que l'agent de vulcanisation donneur de soufre consiste en un ou plusieurs produits choisis parmi le soufre élémentaire, les polysulfures et autres molécules donneurs de soufre.

10. Procédé selon l'une des revendications 1 à 9, caractérisé en ce que l'agent de vulcanisation est présent en quantité propre à fournir 0,5 à 10 % en poids de soufre par rapport au polymère élastomérique.

11. Procédé selon l'une des revendications 1 à 10, caractérisé en ce que le ou les accélérateurs de vulcanisation sont des dithiocarbamates actifs à des températures comprises entre la température ambiante et 100 °C.

12. Procédé selon l'une des revendications 1 à 11, caractérisé en ce que la proportion d'accélérateur de vulcanisation représente 0,1 % à 10 % du poids du polymère élastomérique.

13. Procédé selon l'une des revendications 1 à 12, caractérisé en ce que la formation du mélange vulcanisable à partir du bitume, du polymère élastomérique, de l'agent de vulcanisation et de l'accélérateur de vulcanisation est réalisée à des températures comprises entre 120° C et 180° C.

14. Procédé selon l'une des revendications 1 à 13, caractérisé en ce qu'avant d'incorporer l'agent de vulcanisation et l'accélérateur de vulcanisation au produit homogène résultant de la mise en contact du polymère élastomérique avec le bitume, ledit produit est soumis à une prévulcanisation à l'aide d'un système de vulcanisation donneur de soufre, la prévulcanisation étant conduite de manière à obtenir un produit homogène prévulcanisé ayant une viscosité d'au plus 2 Pa.s à l'état fondu.

15. Procédé selon l'une des revendications 1 à 14, caractérisé en ce que l'agent réducteur de viscosité est l'eau et en ce que la composition finale se présente sous la forme d'une émulsion aqueuse formée d'une dispersion d'une phase organique consistant en le mélange homogène vulcanisable du bitume, du polymère élastomérique vulcanisable au soufre, de l'agent de vulcanisation donneur de soufre et de l'accélérateur de vulcanisation dans une phase aqueuse renfermant un système émulsifiant et éventuellement un agent régulateur du pH de l'émulsion, la quantité de la phase organique présente dans l'émulsion représentant 30 à 90 % du poids de ladite émulsion.

16. Procédé selon la revendication 13, caractérisé en ce que ladite phase organique représente 50 % à 85 % du poids de l'émulsion.

17. Procédé selon l'une des revendications 15 ou 16, caractérisé en ce que l'on forme l'émulsion en amenant simultanément et séparément à une zone de formation de l'émulsion, d'une part, le mélange vulcanisable sous la forme d'une masse fondue, dont la température est comprise entre 100° C et 180° C et, d'autre part, la phase aqueuse possédant une température comprise entre 15° C et 80° C et en maintenant l'ensemble dans ladite zone pendant une durée suffisante pour produire une émulsion.

18. Procédé selon l'une des revendications 1 à 14, caractérisé en ce que l'on utilise l'huile hydrocarbonée à titre d'agent réducteur de viscosité, en proportion représentant 2 % à 70 % en poids de bitume.

19. Procédé selon la revendication 18, caractérisé en ce que ladite proportion d'huile hydrocarbonée représente 3 % à 40 % du poids du bitume.

20. Procédé selon la revendication 18 ou 19, caractérisé en ce que l'huile hydrocarbonée présente un intervalle de distillation à pression atmosphérique, déterminée selon la norme ASTM D 86-87, compris entre 150° C et 400° C.

21. Procédé selon l'une des revendications 18 à 20, caractérisé en ce que l'huile hydrocarbonée est une coupe pétrolière de caractère aromatique, une coupe pétrolière de caractère naphténo-aromatique, une coupe pétrolière de caractère naphténo-paraffinique ou une coupe pétrolière de caractère paraffinique.

22. Procédé selon l'une des revendications 18 à 21, caractérisé en ce que l'on forme la composition homogène finale en incorporant (i) l'agent de vulcanisation, (ii) l'accélérateur de vulcanisation et (iii) l'huile hydrocarbonée audit produit homogène dans l'ordre d'introduction (i), (ii) et (iii) ou dans l'ordre d'introduction (iii), (i) et (ii).

23. Utilisation des compositions bitume/polymère, obtenues par le procédé selon l'une des revendications 1 à 22, à des températures comprises entre la température ambiante et 100° C, pour des applications de techniques routières, d'étanchéité en génie civil ou en bâtiments ou encore pour des applications industrielles.

## Patentansprüche

1. Verfahren zur Herstellung einer flüssigen und bei Temperaturen zwischen Umgebungstemperatur und 100°C vulkanisierbaren Bitumen-Polymer-Zusammensetzung, bei dem man ein elastomeres Polymer mit einem Bitumen im geschmolzenen Zustand bei Temperaturen zwischen 100 und 230°C und unter Rühren bis zur Erzielung eines homogenen Produktes in Berührung bringt, wobei die Menge des elastomeren Polymers 0,5 bis 20 Gew. % des Bitumens ausmacht, und man in das im geschmolzenen Zustand und unter Rühren gehaltene homogene Produkt ein schwefelspendendes Vulkanisationsmittel in einer Menge, die geeignet ist, 0,2 bis 20 Gew.-% Schwefel, bezogen auf das elastomere Polymer, zu liefern und dann wenigstens einen Vulkanisationsbeschleuniger in einer Menge von 0,05 bis 15 Gew.-% des elastomeren Polymers, um ein vulkanisierbares Gemisch zu bilden, einarbeitet, wobei das Verfahren dadurch **gekennzeichnet** ist, daß man einen bei Temperaturen zwischen Umgebungstemperatur und 100°C wirksamen Vulkanisationsbeschleuniger verwendet und das vulkanisierbare Gemisch mit einem Viskositätsminderer, ausgewählt unter Wasser und Kohlenwasserstoffölen mit einem Destillationsbereich unter Atmosphärendruck, ermittelt nach der Norm ASTM D 86-87, zwischen 100 und 500°C unter Rühren mit einer ausreichenden Menge des Viskositätsminderers in Berührung bringt, um eine homogene Endzusammensetzung zu bilden, die eine Temperatur zwischen Umgebungstemperatur und 100°C aufweist und bei dieser Temperatur flüssig ist, wobei diese flüssige Zusammensetzung die Bitumen-Polymer-Zusammensetzung bildet.

2. Verfahren nach Anspruch 1, dadurch **gekennzeichnet**, daß das Bitumen eine Penetrationszahl, ermittelt in 1/10 mm gemäß der Norm NF T 66 004, von 10 bis 500 aufweist.

3. Verfahren nach Anspruch 2, dadurch **gekennzeichnet,** daß die Penetrationszahl 10 bis 300 beträgt.

4. Verfahren nach einem der Ansprüche 1 bis 3, dadurch **gekennzeichnet,** daß das mit Schwefel vulkanisierbare elastomere Polymer ein Copolymer aus Styrol und einem konjugierten Dien ist.

5. Verfahren nach Anspruch 4, dadurch **gekennzeichnet,** daß das Copolymer ein Copolymer aus Styrol und einem konjugierten Dien, ausgewählt unter Butadien, Isopren, Chloropren, carboxyliertem Butadien und carboxyliertem Isopren,ist.

6. Verfahren nach einem der Ansprüche 4 oder 5, dadurch **gekennzeichnet,** daß das Copolymer aus Styrol und einem konjugierten Dien 2 bis 50 Gew.-% Styrol enthält.

7. Verfahren nach einem der Ansprüche 4 bis 6, dadurch **gekennzeichnet,** daß das Copolymer aus Styrol und einem konjugierten Dien eine viskosimetrische Durchschnittsmolekularmasse zwischen 10.000 und 600.000 aufweist.

8. Verfahren nach Anspruch 7, dadurch **gekennzeichnet,** daß die viskosimetrische Durchschnittsmolekularmasse zwischen 30.000 und 500.000 liegt.

9. Verfahren nach einem der Ansprüche 1 bis 8, dadurch **gekennzeichnet,** daß das schwefelspendende Vulkanisationsmittel aus einem oder mehreren Stoffen, ausgewählt unter elementarem Schwefel, Polysulfiden und anderen schwefelspendenden Molekülen, besteht.

10. Verfahren nach einem der Ansprüche 1 bis 9, dadurch **gekennzeichnet,** daß das Vulkanisationsmittel in einer Menge vorliegt, die 0,5 bis 10 Gew.-% Schwefel, bezogen auf das elastomere Polymer, zu liefern vermag.

11. Verfahren nach einem der Ansprüche 1 bis 10, dadurch **gekennzeichnet,** daß der oder die Vulkanisationsbeschleuniger bei Temperaturen zwischen Umgebungstemperatur und 100°C wirksame Dithiocarbamate sind.

12. Verfahren nach einem der Ansprüche 1 bis 11, dadurch **gekennzeichnet,** daß der Mengenanteil des Vulkanisationsbeschleunigers 0,1 bis 10 % des Gewichts des elastomeren Polymers ausmacht.

13. Verfahren nach einem der Ansprüche 1 bis 12, dadurch **gekennzeichnet,** daß die Bildung des vulkanisierbaren Gemischs aus dem Bitumen, dem elastomeren Polymer, dem Vulkanisationsmittel und dem Vulkanisationsbeschleuniger bei Temperaturen zwischen 120 und 180°C durchgeführt wird.

14. Verfahren nach einem der Ansprüche 1 bis 13, dadurch **gekennzeichnet,** daß vor der Zugabe des Vulkanisationsmittel und des Vulkanisationsbeschleunigers zum homogenen Produkt aufgrund der Kontaktierung des elastomeren Polymers mit dem Bitumen das Produkt mit Hilfe eines schwefelspendenden Vulkanisationssystems einer Vorvulkanisierung unterworfen wird, wobei diese so durchgeführt wird, daß man ein vorvulkanisiertes homogenes Produkt mit einer Viskosität von höchstens 2 Pa.s im geschmolzenen Zustand erhält.

15. Verfahren nach einem der Ansprüche 1 bis 14, dadurch **gekennzeichnet,** daß der Viskositätsminderer Wasser ist und die Endzusammensetzung in Form einer wäßrigen Emulsion vorliegt, die durch Dispergierung einer aus dem homogenen vulkanisierbaren Gemisch aus dem Bitumen, dem mit Schwefel vulkanisierbaren elastomeren Polymer, dem schwefelspendenden Vulkanisationsmittel und dem Vulkanisationsbeschleuniger bestehenden organischen Phase in einer ein Emulgatorsystem und gegebenenfalls ein Mittel zur Einstellung des pH der Emulsion enthaltenden wäßrigen Phase, wobei die Menge der organischen Phase in der Emulsion 30 bis 90% des Gewichts der Emulsion ausmacht, gebildet wurde.

16. Verfahren nach Anspruch 13, dadurch **gekennzeichnet,** daß die organische Phase 50 bis 85% des Gewichts der Emulsion ausmacht.

17. Verfahren nach einem der Ansprüche 15 oder 16, dadurch **gekennzeichnet,** daß man die Emulsion bildet, indem man gleichzeitig und getrennt einer Zone der Emulsionsbildung einerseits das vulkanisierbare Gemisch in Form einer geschmolzenen Masse mit einer Temperatur zwischen 100 und 180°C und andererseits die eine Temperatur zwischen 15 und 80°C aufweisende wäßrige Phase zuführt und das Ganze während einer für die Erzeugung einer Emulsion ausreichenden Zeitdauer in der Zone hält.

18. Verfahren nach einem der Ansprüche 1 bis 14, dadurch **gekennzeichnet,** daß man das Kohlenwasserstofföl als Viskositätsminderer in einer Menge von 2 bis 70%, bezogen auf das Gewicht des Bitumens, verwendet.

19. Verfahren nach Anspruch 18, dadurch **gekennzeichnet,** daß der Mengenanteil des Kohlenwasserstofföls 3 bis 40% des Gewichts des Bitumens beträgt.

20. Verfahren nach einem der Ansprüche 18 oder 19, dadurch **gekennzeichnet,** daß das Kohlenwasserstofföl einen Destillationsbereich unter Atmosphärendruck, ermittelt nach der Norm ASTM D 86-87, zwischen 150 und 400°C aufweist.

21. Verfahren nach einem der Ansprüche 18 bis 20, dadurch **gekennzeichnet,** daß das Kohlenwasserstofföl eine aromatische Erdölfraktion,eine naphthenaromatische Erdölfraktion, eine naphthenparaffinische Erdölfraktion oder eine paraffinische Erdölfraktion ist.

22. Verfahren nach einem der Ansprüche 18 bis 21, dadurch **gekennzeichnet,** daß man die homogene Endzusammensetzung bildet, indemman (i) das Vulkanisationsmittel, (ii) den Vulkanisationsbeschleuniger und (iii) das Kohlenwasserstofföl dem homogenen Produkt in der Reihenfolge (i), (ii) und (iii) oder in der Reihenfolge (iii), (i) und (ii) zusetzt.

23. Verwendung der nach dem Verfahren nach einem der Ansprüche 1 bis 22 erhaltenen Bitumen-Polymer-Zusammensetzungen bei Temperaturen zwischen Umgebungstemperatur und 100°C für den Straßenbau, für Abdichtungen im Tiefbau oder für Gebäude sowie für industrielle Zwecke.

## Claims

1. Process for the preparation of a fluid bitumen/polymer composition vulcanisable at temperatures of between ambient temperature and 100°C, in which an elastomeric polymer is brought into contact with a bitumen in the molten state at temperatures of between 100°C and 230°C, under agitation, until a homogeneous product is obtained, the amount of elastomeric polymer representing from 0.5% to 20% by weight of the bitumen, and there are incorporated in the homogeneous product maintained in the molten state and under agitation a sulphur-yielding vulcanisation agent in an amount capable of providing from 0.2% to 20% by weight of sulphur relative to the elastomeric polymer, and then at least one vulcanisation accelerator in a proportion of between 0.05% and 15% of the weight of the elastomeric polymer in order to form a vulcanisable mixture, the process being characterised in that a vulcanisation accelerator active at temperatures of between ambient temperature and 100°C is used and in that the vulcanisable mixture is brought into contact with a viscosity-reducing agent selected from water and hydrocarbon oils having a distillation range at atmospheric pressure, determined in accordance with the ASTM standard D 86-87, of between 100°C and 500°C, operating under agitation with a sufficient proportion of the viscosity-reducing agent, in order to form a final homogeneous composition which has a temperature of between ambient temperature and 100°C and which is fluid at that temperature, the fluid composition constituting the bitumen/polymer composition.

2. Process according to Claim 1, characterised in that the bitumen has a penetration, determined in 1/10 of mm in accordance with the NF standard T 66 004, of from 10 to 500.

3. Process according to Claim 2, characterised in that the penetration is from 10 to 300.

4. Process according to any one of Claims 1 to 3, characterised in that the sulphur vulcanisable elastomeric polymer is a copolymer of styrene and a conjugated diene.

5. Process according to Claim 4, characterised in that the copolymer is a copolymer of styrene and a conjugated diene selected from butadiene, isoprene, chloroprene, carboxylated butadiene and carboxylated isoprene.

6. Process according to Claim 4 or 5, characterised in that the copolymer of styrene and a conjugated diene contains from 2% to 50% by weight of styrene.

7. Process according to any one of Claims 4 to 6, characterised in that the copolymer of styrene and a conjugated diene has an average viscosimetric molecular mass of between 10,000 and 600,000.

8. Process according to Claim 7, characterised in that the viscosimetric molecular mass is between 30,000 and 500,000.

9. Process according to any one of Claims 1 to 8, characterised in that the sulphur-yielding vulcanisation agent comprises one or more materials selected from elemental sulphur, polysulphides and other sulphur-yielding molecules.

10. Process according to any one of Claims 1 to 9, characterised in that the vulcanisation agent is present in an amount capable of providing from 0.5 to 10% by weight of sulphur relative to the elastomeric polymer.

11. Process according to any one of Claims 1 to 10, characterised in that the vulcanisation accelerator(s) are dithiocarbamates active at temperatures of between ambient temperature and 100°C.

12. Process according to any one of Claims 1 to 11, characterised in that the proportion of vulcanisation accelerator represents from 0.1% to 10% of the weight of the elastomeric polymer.

13. Process according to any one of Claims 1 to 12, characterised in that the formation of the vulcanisable mixture from the bitumen, the elastomeric polymer, the vulcanisation agent and the vulcanisation accelerator is carried out at temperatures of between 120°C and 180°C.

14. Process according to any one of Claims 1 to 13, characterised in that, before the incorporation of the vulcanisation agent and the vulcanisation accelerator into the homogeneous product resulting from the elastomeric polymer's being brought into contact with the bitumen, said product is subjected to prevulcanisation using a sulphur-yielding vulcanisation system, the prevulcanisation being carried out in such a manner as to obtain a prevulcanised homogeneous product having a viscosity of no more than 2 Pa.s in the molten state.

15. Process according to any one of Claims 1 to 14, characterised in that the viscosity-reducing agent is water and in that the final composition is in the form of an aqueous emulsion formed from a dispersion of an organic phase comprising the vulcanisable homogeneous mixture of the bitumen, the sulphur vulcanisable elastomeric polymer, the sulphur-yielding vulcanisation agent and the vulcanisation accelerator in an aqueous phase containing an emulsifying system and optionally an agent regulating the pH of the emulsion, the amount of organic phase present in the emulsion representing from 30 to 90% of the weight of the emulsion.

16. Process according to Claim 13, characterised in that the organic phase represents from 50% to 85% of the weight of the emulsion.

17. Process according to either Claim 15 or Claim 16, characterised in that the emulsion is formed by bringing simultaneously and separately to an emulsion formation area, on the one hand, the vulcanisable mixture in the form of a molten mass of which the temperature is between 100°C and 180°C and, on the other hand, the aqueous phase having a temperature of between 15°C and 80°C and by maintaining the whole in said region for a period sufficient to produce an emulsion.

18. Process according to any one of Claims 1 to 14, characterised in that the hydrocarbon oil is used as a viscosity-reducing agent in a proportion representing from 2% to 70% by weight of the bitumen.

19. Process according to Claim 18, characterised in that the proportion of hydrocarbon oil represents from 3% to 40% of the weight of the bitumen.

20. Process according to Claim 18 or 19, characterised in that the hydrocarbon oil has a distillation range at atmospheric pressure, determined in accordance with the ASTM standard D 86-87, of between 150°C and 400°C.

21. Process according to any one of Claims 18 to 20, characterised in that the hydrocarbon oil is a petroleum fraction of aromatic character, a petroleum fraction of naphtheno-aromatic character, a petroleum fraction of naphthenoparaffin character or a petroleum fraction of paraffin character.

22. Process according to any one of Claims 18 to 21, characterised in that the final homogeneous composition is formed by incorporating (i) the vulcanisation agent, (ii) the vulcanisation accelerator and (iii) the hydrocarbon oil in the homogeneous product in the order of introduction (i), (ii) and (iii) or in the order of introduction (iii), (i) and (ii).

23. Use of the bitumen/polymer compositions obtained by the process according to any one of Claims 1 to 22, at temperatures of between ambient temperature and 100°C, for road engineering applications, sealing applications in civil engineering or in buildings or for industrial applications.
